# EUROPEAN PATENT SPECIFICATION

(11) **EP 4 269 252 B1**
(45) Date of publication and mention of the grant of the patent: **04.06.2025**
(21) Application number: 23167714.7
(22) Date of filing: 13.04.2023
(51) Int. Cl.: B64D 37/00, B64D 37/32

(54) **VENTILATION OF AIRCRAFT FUEL SYSTEM**
BELÜFTUNG EINES FLUGZEUGKRAFTSTOFFSYSTEMS
VENTILATION D'UN SYSTÈME DE CARBURANT D'AÉRONEF

(30) Priority: 29.04.2022 GB 202206258
(43) Date of publication of application: 01.11.2023
(73) Proprietor: Airbus Operations Limited, Bristol BS34 7PA (GB)
(72) Inventor: GADD, Matthew, Bristol, BS34 7PA (GB); FALLON, Adam, Bristol, BS34 7PA (GB)
(74) Representative: Ribeiro, James Michael

(56) References cited:
- US-A- 3 075 543
- US-A1- 2020 317 359
- US-A1- 2022 081 123

## Description

### FIELD OF THE INVENTION

The present invention relates to a fuel system for an aircraft, and a method of ventilating a fuel system of an aircraft.

### BACKGROUND OF THE INVENTION

Conventional aircraft fuel systems have open vented fuel tanks that breathe to outside atmosphere during refuel (volume replacement), cruise (active replacement of ullage through fuel tank inerting), and ascent and descent (atmospheric pressure changes).

The ullage is typically filled with a fuel vapour/air mixture containing volatile organic compounds which may be released into the atmosphere.

To reduce the risk of rupture and implosion caused by changing pressure differentials across the walls of an aircraft fuel tank, climb valves (pressure relief valves) and dive valves (vacuum relief valves) may be installed on a wall of the tank. WO2019/092190 A1 discloses a single valve that can act as both a climb valve (pressure relief valve) and a dive valve (vacuum relief valve).

Conventional climb and dive valves are passive devices, and this can result in fuel vapour being released from the fuel tank via the valve at a location which is unsuitable, for instance for environmental reasons.

US 2022/081123 A1 discloses a fuel storage system having a fuel tank configured to store a liquid fuel; a controllable pressure source for altering the pressure in an ullage space of the fuel tank; and a controller. The controller is configured to determine a target pressure for the ullage space at a given time based on information relating to a temperature of fuel inside the fuel tank at the given time; and to control the pressure source such as to cause the pressure in the ullage space to be substantially equal to the target pressure.

US 2020/317359 A1 discloses a fuel tank inerting systems and methods for aircraft are described. The systems and methods include controlling of (i) a first reactant control element, (ii) a second reactant control valve, (iii) a ram air control valve, (iv) a driving mechanism, and (v) a flow control valve, to control a state of a fuel tank inerting system. The states of the fuel tank inerting system include an OFF state, a CIRCULATE state, a PRIME state, a CATWARM state, an ON state, a DEPRESSURIZE state, and a COOLDOWN state, wherein the states are determined in part by a prior state and/or a position/actuation of a given element of the system.

US3075543A discloses a liquid containing means in the form of tank, a flow means for the flow of liquid out of tank may include conduits, valves, or similar devices. The function of the flow device results in lowering the liquid level in tank so that periodic replenishing, hereof from a suitable source is necessary. To this end, conduit means in the form of supply line and inlet line are provided connecting source with tank through a main liquid level control valve, the operation of which either initiates or terminates replenishing liquid flow from the supply line into the tank.

### SUMMARY OF THE INVENTION

A first aspect of the invention provides a fuel system for an aircraft, the fuel system comprising: a fuel tank; a valve; a valve actuator with a control input, wherein the valve actuator is configured to open the valve in response to command signals on the control input, and the valve is configured so that opening of the valve ventilates the fuel tank causing fuel vapour to be released from the fuel tank via the valve; and a control system coupled to the control input, wherein the control system is configured to generate command signals and apply the command signals to the control input.

The fuel system further comprises a control-parameter system configured to obtain one or more control-parameters, and the control system comprises an automated control system which is coupled to the control-parameter system, and the automated control system is configured to automatically generate the command signals on a basis of the one or more control-parameters. The one or more control-parameters comprise:
a. a control-parameter indicative of an environmental condition local to the fuel tank, wherein the environmental condition is an air composition, or
b. a control-parameter indicative of a location of the aircraft compared with a geographical database of: population density, air quality, or local regulations, or
c. a control-parameter indicative of future route planning of the aircraft, or
d. a control-parameter indicative of whether fuel vapour emissions from the fuel system have exceeded or will exceed a threshold.

Optionally the one or more control-parameters comprise the control-parameter indicative of the environmental condition local to the fuel tank. Typically the environmental condition local to the fuel tank is a condition of an environment local to the aircraft and outside the fuel tank.

Optionally the one or more control-parameters comprise the control-parameter indicative of the location of the aircraft.

Optionally the one or more control-parameters comprise the control-parameter indicative of future route planning of the aircraft.

Optionally the one or more control-parameters comprise the control-parameter indicative of whether fuel vapour emissions from the fuel system have exceeded or will exceed the threshold.

A further aspect of the invention provides a method of ventilating a fuel system of an aircraft, the fuel system comprising a fuel tank and a valve, the method comprising: assessing a suitability for release of fuel vapour; and opening the valve on a basis of the assessment, wherein the opening of the valve causes fuel vapour to be released from the fuel tank via the valve. Assessing a suitability for release of fuel vapour comprises:
a. assessing a suitability of an environmental condition local to the aircraft for release of fuel vapour, wherein the environmental condition is an air composition, or
b. assessing a suitability of a location of the aircraft for release of fuel vapour by comparing the location of the aircraft with a geographical database of:
   population density, air quality, or local regulations, or
c. assessing whether a volume of fuel vapour emissions from the fuel system has exceeded a threshold or will exceed a threshold, or
d. assessing future route planning of the aircraft.

Optionally, assessing a suitability for release of fuel vapour comprises: assessing the suitability of the environmental condition local to the fuel tank for release of fuel vapour. Typically the environmental condition local to the fuel tank is a condition of an environment local to the aircraft and outside the fuel tank.

Optionally, assessing a suitability for release of fuel vapour comprises: assessing the suitability of the location of the aircraft for release of fuel vapour.

Optionally, assessing a suitability for release of fuel vapour comprises: assessing whether the volume of fuel vapour emissions from the fuel system has exceeded the threshold or will exceed the threshold.

Optionally, assessing a suitability for release of fuel vapour comprises: assessing future route planning of the aircraft.

The comments below apply to any or all aspects of the invention, where applicable.

Optionally the fuel system further comprises a vent tank in fluid communication with atmosphere, optionally via a NACA duct or other opening. The valve may be fitted between the fuel tank and the vent tank. The opening of the valve may cause fuel vapour to be released from the fuel tank into the vent tank via the valve.

Optionally the fuel vapour released from the fuel tank via the valve is released into the atmosphere. The fuel vapour may be directly released from the valve into the atmosphere, or indirectly released from the valve into the atmosphere - for instance via a vent tank.

The assessment of suitability may be performed by operating a command algorithm to automatically assess the suitability based on the environmental condition and/or the location of the aircraft.

Optionally the control system comprises an input device configured to generate the command signals in response to user inputs.

Optionally the control-parameter system comprises one or more sensors onboard the aircraft configured to sense the one or more control-parameters. For example the one or more sensors may sense an environmental condition such as air quality, or a location of the aircraft.

The environmental condition is an air composition.

Optionally the air composition is an air quality, nitrogen oxide level, carbon dioxide level, or ozone level.

Optionally the location is a global position or altitude.

Optionally the fuel system further comprises a pressure sensing system configured to determine a pressure difference between inside the fuel tank and outside the fuel tank, wherein the control system is further configured to generate an equalisation signal to open the valve in response to the pressure difference crossing a threshold.

Optionally the control system is configured to generate an equalisation signal to open the valve in response to the pressure difference increasing above a positive pressure threshold.

Optionally the control system is configured to generate an equalisation signal to open the valve in response to the pressure difference decreasing below a negative pressure threshold.

Optionally the fuel system further comprises an overpressure protector, wherein the overpressure protector is configured to open or burst to equalise pressure of the fuel tank in response to a pressure difference across the overpressure detector crossing a limit.

Optionally the command signals are electrical command signals. Alternatively the command signals may be hydraulic or pneumatic command signals.

Optionally the valve comprises a ball valve.

Optionally the valve actuator is at least partially located outside the fuel tank.

### BRIEF DESCRIPTION OF THE DRAWINGS

Figure 1 is a plan view of an aircraft;
Figure 2 is a plan view of a fuel system of the aircraft with an automated control system;
Figure 3 is a front view of the wing; and
Figure 4 is a plan view of a fuel system of the aircraft with a manual control system.

### DETAILED DESCRIPTION OF EMBODIMENT(S)

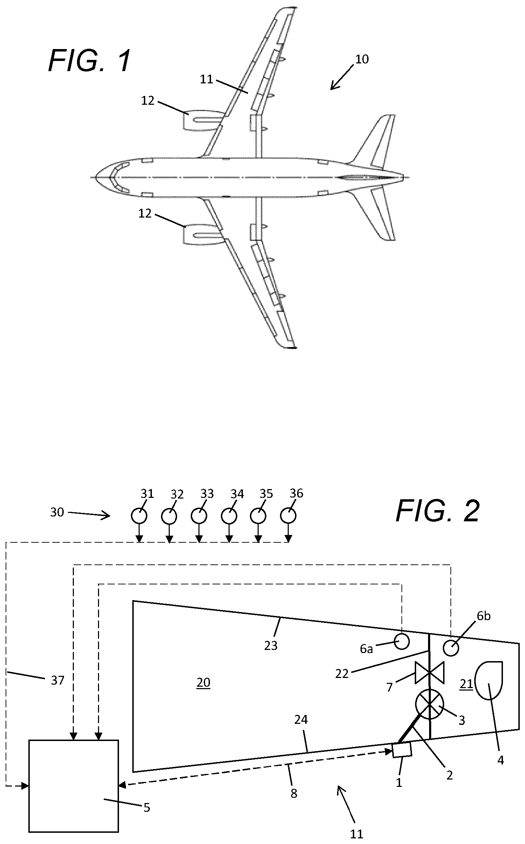

An aircraft 10 shown in Figure 1 comprises a pair of wings extending from a fuselage. The aircraft comprises a fuel system for feeding fuel to wing-mounted engines 12. The fuel system comprises one or more fuel tanks in each wing, and a centre-tank. Figure 2 is a schematic view showing the fuel system in the starboard wing 11.

The fuel system comprises a fuel tank 20 and a vent tank 21, separated by a boundary wall 22. The fuel tank 20 can be filled with liquid hydrocarbon aviation fuel and contains pumps (not shown) for feeding the fuel to the engine 12. An ullage above the fuel contains fuel vapour. An inerting system (not shown) may be provided to feed inert gas into the ullage. Fore and aft boundaries of the tanks 20, 21 are provided by spars 23, 24.

A valve 3 is fitted into the boundary wall 22 between the tanks. The valve 3 may be a ball valve, i.e. a valve with a ball which can be rotated between an open position in which a hole in the ball is in line with the flow between the tanks, and a closed position in which the hole is perpendicular to the flow so the flow between the tanks is blocked. Alternatively, the valve 3 may comprise any other type of valve which can be opened and closed to control the flow of gas between the tanks.

A valve actuator 1 is housed in the wing outside the fuel tank 20, remote from the valve 3. The valve actuator 1 has a driveshaft 2 which is coupled to the ball of the valve 3, so that rotation of the driveshaft 1 causes the ball to rotate between its open and closed positions.

The valve actuator 1 is provided with a control input 8. The valve actuator 1 is configured to open the valve 3 in response to "open valve" command signals on the control input 8. Optionally the valve actuator 1 is also configured to close the valve 3 in response to "close valve" command signals on the control input 8.

In this case the valve actuator 1 is an electromagnetic actuator which is configured to rotate the driveshaft 2 to open the valve 3 in response to electrical command signals on the control input 8. In other embodiments the valve actuator may be controlled by hydraulic or pneumatic command signals.

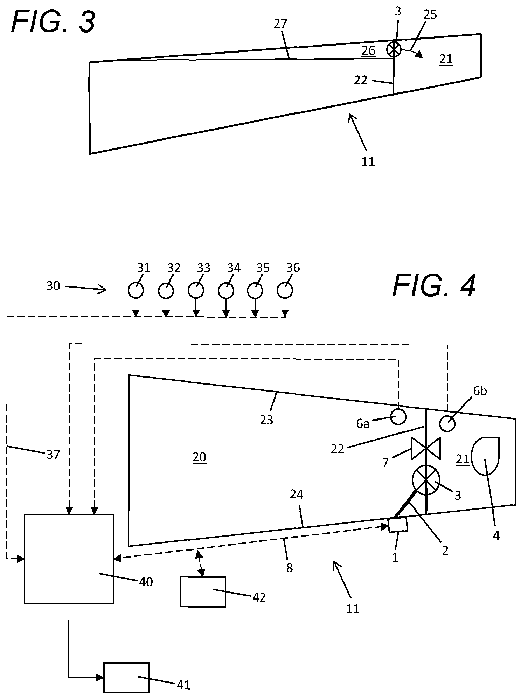

Figure 3 is a front view of the wing 11 showing fuel 27 in the fuel tank 20 and an ullage 26 above the fuel 27. As shown in Figure 3, the valve 3 is positioned at the top of the boundary wall 22.

The opening of the valve 3 causes fuel vapour 25 from the ullage 26 to be released from the fuel tank 20 into the vent tank 21 via the valve 3, as shown in Figure 3. The vent tank 21 has a NACA duct 4 or other opening on the underside of the wing, so the vent tank 21 is in fluid communication with the atmosphere. Hence the fuel vapour 25 released from the fuel tank 20 via the valve 3 is released indirectly into the atmosphere outside the wing, via the vent tank 21 and the NACA duct 4.

An automated control system 5 is coupled to the control input 8. The automated control system 5 may comprise an avionics computer which hosts a commanding algorithm.

A control-parameter system 30 is configured to obtain control-parameters which are input to the automated control system 5.

For example each control-parameter may be indicative of an environmental condition local to the fuel tank, a location of the aircraft, or a future route plan of the aircraft 10.

The control-parameter system 30 may comprise various environmental sensors configured to sense a control-parameter which is indicative of an environmental condition, such as a composition of the atmosphere local to the fuel tank outside the wing. The environmental sensors may comprise an air quality sensor 31 configured to sense air quality, and/or a nitrogen oxide (NOₓ) sensor 32 configured to sense nitrogen oxide level, and/or a carbon dioxide (CO₂) sensor 33 configured to sense carbon dioxide level, and/or an ozone (O₃) sensor 34 configured to sense ozone level.

The environmental sensors 31-34 of the control-parameter system 30, in this example, are all onboard the aircraft 10. In another embodiment, the control-parameter system 30 may also include off-board environmental sensors which communicate a real-time environmental condition (such as air quality, nitrogen oxide level, carbon dioxide level or ozone level) to the automated control system 5 onboard the aircraft. The off-board environmental sensors may be ground-based, or satellite-based for example.

In the examples above, the control-parameter system 30 includes various sensors, which may or may not be onboard the aircraft. In another embodiment, the control-parameter system 30 may obtain a control-parameter by simply receiving an input (such as an Air Quality Index - AQI) from an off-board sensing system.

The control-parameter system 30 may also comprise various location sensors configured to sense a control-parameter which is indicative of a location of the aircraft, and hence the location of the aircraft fuel system. The location sensors may comprise an altimeter 35 configured to sense an altitude of the aircraft, and/or a satellite navigation system 36 configured to sense a global position of the aircraft. The satellite navigation system 36 may comprises a Global Position System (GPS) system or any other type of Global Navigation Satellite System (GNSS) which determines global position coordinates of the aircraft.

The automated control system 5 is coupled to the control-parameter system 30 by one or more input lines 37. As explained in detail below, the commanding algorithm hosted by the automated control system 5 is configured to automatically generate command signals on a basis of the control-parameters and apply the command signals to the control input 8.

In general terms, the commanding algorithm assesses a suitability of the control-parameters for release of fuel vapour and opens the valve 3 automatically on a basis of the assessment. This ensures that fuel vapour is released from the fuel tank 20 via the valve 3 at an appropriate time, for instance when the fuel vapour is less environmentally damaging, for instance at high altitude.

The control-parameters generated by the location sensors 35, 36 give an indication of a location of the aircraft. If the aircraft is at a high altitude, then the assessment by the commanding algorithm may indicate that fuel vapour can be released safely, so the automated control system 5 may generate an "open valve" command signal and apply the "open valve" command signal to the control input 8. This causes the valve 3 to open to release fuel vapour 25 from the fuel tank 20 via the valve 3, as shown in Figure 3.

If the aircraft is at a global position with a low population (for instance over the sea) then the assessment by the commanding algorithm may indicate that fuel vapour can be safely released, even at a low altitude, so the automated control system 5 may generate an "open valve" command signal and apply it to the control input 8 in a similar way. This assessment may be made by comparing the current global position with a geographical database of population density, hosted on or off the aircraft.

Alternatively, if the aircraft is at a global position which is known to have local environmental conditions (for example high air quality) which make the release of fuel vapour acceptable, even at a low altitude, then the automated control system 5 may generate an "open valve" command signal and apply it to the control input 8 in a similar way. This assessment may be made by comparing the current global position with a geographical database of air quality (real-time air quality per region, or expected air quality per region) which is hosted on or off the aircraft.

Alternatively, if the aircraft is at a global position which is known to have local regulations which make the release of fuel vapour acceptable, even at a low altitude, then the automated control system 5 may generate an "open valve" command signal and apply it to the control input 8 in a similar way. This assessment may be made by comparing the current global position with a geographical database of local regulations, hosted on or off the aircraft.

By way of example, the local regulations associated with the current global position of the aircraft may state that emissions are permitted, or they may state that emissions are permitted if the concentration of fuel vapour in the emissions is below a certain threshold.

In summary, the location of the aircraft may be sensed (for instance its altitude and/or global position) using one or more of the location sensors 35, 36. The commanding algorithm assesses a suitability of the location for release of fuel vapour, and the valve 3 may be opened or closed on a basis of the assessment (optionally in combination with an assessment based on the control-parameters generated by the environmental sensors 31-34). This may prevent fuel vapour being released when the current location is not appropriate, for instance when the aircraft is at a low altitude near a population centre, or at a global location which is known to have a low air quality or strict regulations.

The control-parameters generated by the environmental sensors 31-34 give a real-time indication of an environmental condition in the form of an air composition of the atmosphere local to the fuel tank.

If the atmosphere has a low air quality, a high nitrogen oxide level, a high carbon dioxide carbon dioxide level, and/or a high ozone level, then the assessment by the commanding algorithm may indicate that fuel vapour should not be released, so the automated control system 5 may generate a "close valve" command signal and apply the "close valve" command signal to the control input 8 so the valve 3 closes (or remains closed).

If the atmosphere has a high air quality, a low nitrogen oxide level, a low carbon dioxide carbon dioxide level, and a low ozone level, then the assessment by the commanding algorithm may indicate that fuel vapour can be released safely, so the automated control system 5 may generate an "open valve" command signal and apply the "open valve" command signal to the control input 8 so the valve 3 opens (or remains open) to release fuel vapour 25 from the fuel tank via the valve 3, as shown in Figure 3.

In summary, one or more environmental conditions local to the aircraft may be sensed, using one or more of the environmental sensors 31-34. The commanding algorithm assesses a suitability of the environmental condition for release of fuel vapour, and the valve 3 may be opened or closed on a basis of the assessment (optionally in combination with an assessment based on the control-parameters generated by the location sensors 35, 36). This may prevent fuel vapour being released when the environmental conditions are not appropriate, for instance when the local air quality is already low and will be made worse by the release of the fuel vapour.

In the example above, the opening and closing of the valve 3 is controlled by the automated control system 5 on the basis of whether an environmental condition or location is suitable for release of fuel vapour. Optionally the automated control system 5 may also open or close the valve 3 on the basis of acceptable thresholds for certain emissions - such thresholds optionally taking into account regulation. In this case the automated control system 5 may assess whether a volume of fuel vapour emissions from the fuel system has exceeded a threshold, and open or close the valve 3 on a basis of the assessment. In this case the control-parameter system 30 may include a sensor for generating a control-parameter indicative of whether a volume of fuel vapour emissions from the fuel system has exceeded the threshold. Alternatively, the automated control system 5 may know that a certain expected volume of air will be emitted during a refuelling operation, and if that expected volume is below a certain predetermined threshold then the valve 3 is kept open during the refuelling operation.

In the examples above, the automated control system 5 assesses a suitability of a current environmental condition local to the aircraft for release of fuel vapour, or a suitability of a current location of the aircraft for release of fuel vapour, and controls the valve 3 based on that assessment. Optionally the commanding algorithm of the automated control system 5 may also assess the suitability based on future route planning of the aircraft.

For example, if the aircraft is due to fly into a region of lower air quality or higher population density at a future time, then the automated control system 5 may open the valve 3 (or keep it open) to release the fuel vapour when it would otherwise not do so based on the current location or local environmental conditions. The reverse may also be true - if the aircraft is due to fly into a region of higher air quality or lower population density at a future time, then the automated control system 5 may close the valve 3 (or keep it closed) when it would otherwise not do so. In this example the control-parameter system 30 may be configured to determine (or otherwise obtain) one or more control-parameters indicative of future route planning of the aircraft, and the automated control system 5 may be configured to automatically generate the command signals on a basis of the future route planning of the aircraft.

A pressure sensing system 6a, 6b is configured to determine a pressure difference between inside the fuel tank 20 and outside the fuel tank 20. The pressure sensing system comprises a pressure sensor 6a in the fuel tank 20, and a pressure sensor 6b in the vent tank 21 which is exposed to ambient pressure via the NACA duct 4. The pressure sensor readings are subtracted by the automated control system 5 to determine the pressure difference.

During climb of the aircraft, the ambient pressure decreases, so a positive pressure difference may develop. The automated control system 5 may generate an equalisation command signal to open the valve 3 in response to the pressure difference increasing above a positive pressure threshold.

Maintaining high tank pressure during flight reduces fuel outgassing, so the positive pressure threshold may be set at a relatively high level. This reduces flammability as well as reducing emission of fuel vapour during flight.

During descent of the aircraft, the ambient pressure increases so a negative pressure difference may develop. The automated control system 5 may generate an equalisation command signal to open the valve 3 in response to the pressure difference decreasing below a negative pressure threshold.

Hence the valve 3 provides a so-called "climb and dive" function to protect the fuel tank 20 against the forces generated by a large pressure difference, in addition to being selectively operable to ventilate the fuel tank 20 and release fuel vapour when this is deemed by the commanding algorithm to be appropriate for environmental reasons.

In the example above, the "climb and dive" function of the valve 3 is controlled by equalisation command signals generated by the automated control system 5. In an alternative embodiment, the "climb and dive" function of the valve 3 may be mechanical only, with the automated control system 5 providing a secondary means of opening the valve 3.

The valve 3 minimises bleed air demand and the size of the inerting system required for feeding inert gas into the ullage 26. It also isolates the fuel tank from atmosphere during periods of inactivity on the ground.

The automated control system 5 takes control-parameters from the pressure sensing system 6a, 6b and the control-parameter system 30, and the commanding algorithm automatically decides when to actuate the valve 3 and allow ventilation of ullage hydrocarbons to atmosphere based on these control-parameters. The commanding algorithm trades the structural tank pressure delta versus design thresholds, and the environmental consequence or benefit of allowing venting at that location and altitude of operation.

If the normal operation of the valve 3 fails, the fuel tank 20 may be protected by a secondary means of pressure equalisation. This can be a passive or partially mechanical device 7 known as an overpressure protector. The overpressure protector 7 comprises a spring-loaded valve or graphite disc designed to open or burst in response to a pressure difference across the overpressure detector crossing a design limit for positive or negative pressure difference.

In the embodiment of Figure 2, an automated control system 5 is configured to automatically generate command signals on a basis of control-parameters from the control-parameter system 30, and also configured to generate equalisation command signals to equalise the tank pressure.

The embodiment of Figure 4 provides an alternative control system with a manual control function for ventilating the fuel tank. Many elements of the embodiment of Figure 4 are identical to the embodiment of Figure 2. Identical elements are given the same reference number and will not be described again.

In the case of Figure 4, the control system comprises an avionics computer 40 and a user input device 41 such as a touch screen or voice-activated input device.

The avionics computer 40 receives the control parameters from the control-parameter system 30 and outputs them on a display screen 41 or other output device.

A member of the flight crew may view the control parameters on the display screen 41 during flight of the aircraft and assess whether it is appropriate to open the valve 3 based on the displayed control parameters. The pilot can then open or close the valve 3, based on the assessment, by making manual inputs into the input device 42. The input device 42 generates command signals based on the manual inputs and applies them to the control input 8.

Alternatively, ground-crew may make manual inputs into the input device 42 to open the valve 3 and enable the fuel vapour to be released from the fuel tank.

The avionics computer 40 is configured to generate equalisation command signals to open the valve 3 in response to the pressure difference (as measured by the pressure sensing system 6a, 6b) crossing a threshold. This retains the "climb and dive valve" function, which can be manually over-ridden by the command signals from the input device 42.

During maintenance of the fuel tank 20 on the ground it may be necessary to equalise the pressure of the fuel tank 20 with atmospheric pressure. This pressure equalisation may be achieved by manual mechanical operation of a separate pressure equalisation valve (not shown) by ground-crew. The arrangement of Figure 4 enables the ground-based maintenance personnel to equalise the pressure of the fuel tank 20 by making user inputs into the input device 42. This obviates the need for such a separate pressure equalisation valve.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A fuel system for an aircraft (10), the fuel system comprising: a fuel tank (20); a valve (3); a valve actuator (1) with a control input (8), wherein the valve actuator (1) is configured to open the valve in response to command signals on the control input (8), and the valve (3) is configured so that opening of the valve ventilates the fuel tank (20) causing fuel vapour to be released from the fuel tank via the valve (3); a control system coupled to the control input (8), wherein the control system is configured to generate command signals and apply the command signals to the control input; and a control-parameter system (30) configured to obtain one or more control-parameters, wherein the control system comprises an automated control system (5) which is coupled to the control-parameter system (30), and the automated control system (5) is configured to automatically generate the command signals on a basis of the one or more control-parameters, and **characterised in that** the one or more control-parameters comprise:
a. a control-parameter indicative of an environmental condition local to the fuel tank, wherein the environmental condition is an air composition, or
b. a control-parameter indicative of a location of the aircraft (10) compared with a geographical database of: population density, air quality, or local regulations, or
c. a control-parameter indicative of future route planning of the aircraft (10), or
d. a control-parameter indicative of whether fuel vapour emissions from the fuel system have exceeded or will exceed a threshold.

2. A fuel system according to claim 1, wherein the one or more control-parameters comprise the control-parameter indicative of the environmental condition local to the fuel tank (20).

3. A fuel system according to claim 2, wherein the environmental condition local to the fuel tank (20) is a condition of an environment local to the aircraft and outside the fuel tank.

4. A fuel system according to any preceding claim, wherein the one or more control-parameters comprise the control-parameter indicative of the location of the aircraft (10).

5. A fuel system according to any preceding claim, wherein the one or more control-parameters comprise the control-parameter indicative of future route planning of the aircraft (10).

6. A fuel system according to any preceding claim, further comprising a pressure sensing system (6a, 6b) configured to determine a pressure difference between inside the fuel tank (20) and outside the fuel tank, wherein the control system is configured to generate an equalisation command signal to open the valve (3) in response to the pressure difference crossing a threshold.

7. A fuel system according to any preceding claim, further comprising a vent tank (21) in fluid communication with atmosphere, wherein the valve (3) is configured so that opening of the valve (3) causes the fuel vapour to be released from the fuel tank (20) into the vent tank (21) via the valve (3).

8. A fuel system according to any preceding claim, wherein the valve (3) is configured so that the fuel vapour released from the fuel tank (20) via the valve (3) is released, directly or indirectly, into the atmosphere.

9. A fuel system according to any preceding claim, wherein the control system is configured to generate the command signals and apply the command signals to the control input during flight of the aircraft (10).

10. A method of ventilating a fuel system of an aircraft (10), the fuel system comprising a fuel tank (20) and a valve (3), the method comprising: assessing a suitability for release of fuel vapour; and opening the valve (3) on a basis of the assessment, wherein the opening of the valve (3) causes fuel vapour to be released from the fuel tank (20) via the valve (3), wherein assessing a suitability for release of fuel vapour comprises:
a. assessing a suitability of an environmental condition local to the fuel tank (20) for release of fuel vapour, wherein the environmental condition is an air composition, or
b. assessing a suitability of a location of the aircraft (10) for release of fuel vapour by comparing the location of the aircraft with a geographical database of: population density, air quality, or local regulations, or
c. assessing whether a volume of fuel vapour emissions from the fuel system has exceeded a threshold or will exceed a threshold, or
d. assessing future route planning of the aircraft (10).

11. A method according to claim 10 wherein assessing a suitability for release of fuel vapour comprises assessing the suitability of the environmental condition local to the fuel tank (20) for release of fuel vapour.

12. A method according to claim 10 or 11, wherein the environmental condition local to the fuel tank (20) is a condition of an environment local to the aircraft (10) and outside the fuel tank (20).

13. A method according to any of claims 10 to 12 wherein assessing a suitability for release of fuel vapour comprises assessing the suitability of the location of the aircraft (10) for release of fuel vapour.

14. A method according to any of claims 10 to 13 wherein assessing a suitability for release of fuel vapour comprises assessing whether the volume of fuel vapour emissions from the fuel system has exceeded the threshold or will exceed the threshold.

15. A method according to any of claims 10 to 14 wherein assessing a suitability for release of fuel vapour comprises assessing future route planning of the aircraft (10).

## Patentansprüche

1. Kraftstoffsystem für ein Luftfahrzeug (10), wobei das Kraftstoffsystem Folgendes umfasst: einen Kraftstofftank (20); ein Ventil (3); einen Ventilaktor (1) mit einem Steuereingang (8), wobei der Ventilaktor (1) konfiguriert ist, das Ventil in Reaktion auf Anweisungssignale am Steuereingang (8) zu öffnen, und das Ventil (3) derart konfiguriert ist, dass ein Öffnen des Ventils den Kraftstofftank (20) entlüftet, was verursacht, dass Kraftstoffdampf vom Kraftstofftank mittels des Ventils (3) freigegeben wird; ein Steuersystem, das an den Steuereingang (8) gekoppelt ist, wobei das Steuersystem konfiguriert ist, Anweisungssignale zu erzeugen und die Anweisungssignale an den Steuereingang anzulegen; und ein Steuerparametersystem (30), das konfiguriert ist, einen oder mehrere Steuerparameter zu erhalten, wobei das Steuersystem ein automatisiertes Steuersystem (5) umfasst, das an das Steuerparametersystem (30) gekoppelt ist, und das automatisierte Steuersystem (5) konfiguriert ist, die Anweisungssignale auf der Grundlage des einen oder der mehreren Steuerparameter automatisch zu erzeugen, **dadurch gekennzeichnet, dass** der eine oder die mehreren Steuerparameter Folgendes umfassen:
a. einen Steuerparameter, der einen zum Kraftstofftank lokalen Umgebungszustand angibt, wobei der Umgebungszustand eine Luftzusammensetzung ist, oder
b. einen Steuerparameter, der einen Ort des Luftfahrzeugs (10) im Vergleich zu einer geographischen Datenbank von Folgendem angibt: Populationsdichte, Luftqualität oder lokale Regulierungen, oder
c. einen Steuerparameter, der eine künftige Routenplanung des Luftfahrzeugs (10) angibt, oder
d. einen Steuerparameter, der angibt, ob Kraftstoffdampfemissionen vom Kraftstoffsystem einen Schwellenwert überschritten haben oder überschreiten werden.

2. Kraftstoffsystem nach Anspruch 1, wobei der eine oder die mehreren Steuerparameter den Steuerparameter umfassen, der den zum Kraftstofftank (20) lokalen Umgebungszustand angibt.

3. Kraftstoffsystem nach Anspruch 2, wobei der zum Kraftstofftank (20) lokale Umgebungszustand ein Zustand einer Umgebung ist, die zum Luftfahrzeug lokal und außerhalb des Kraftstofftanks ist.

4. Kraftstoffsystem nach einem vorhergehenden Anspruch, wobei der eine oder die mehreren Steuerparameter den Steuerparameter umfassen, der den Ort des Luftfahrzeugs (10) angibt.

5. Kraftstoffsystem nach einem vorhergehenden Anspruch, wobei der eine oder die mehreren Steuerparameter den Steuerparameter umfassen, der eine künftige Routenplanung des Luftfahrzeugs (10) angibt.

6. Kraftstoffsystem nach einem vorhergehenden Anspruch, das ferner ein Druckerfassungssystem (6a, 6b) umfasst, das konfiguriert ist, eine Druckdifferenz zwischen innerhalb des Kraftstofftanks (20) und außerhalb des Kraftstofftanks zu bestimmen, wobei das Steuersystem konfiguriert ist, ein Ausgleichsanweisungssignal, um das Ventil (3) zu öffnen, in Reaktion darauf zu erzeugen, dass die Druckdifferenz einen Schwellenwert überschreitet.

7. Kraftstoffsystem nach einem vorhergehenden Anspruch, das ferner einen Entlüftungsbehälter (21) in Fluidkommunikation mit der Atmosphäre umfasst, wobei das Ventil (3) derart konfiguriert ist, dass ein Öffnen des Ventils (3) verursacht, dass der Kraftstoffdampf aus dem Kraftstofftank (20) mittels des Ventils (3) in den Entlüftungsbehälter (21) freigegeben wird.

8. Kraftstoffsystem nach einem vorhergehenden Anspruch, wobei das Ventil (3) derart konfiguriert ist, dass der Kraftstoffdampf, der aus dem Kraftstofftank (20) mittels des Ventils (3) freigegeben wird, direkt oder indirekt in die Atmosphäre freigegeben wird.

9. Kraftstoffsystem nach einem vorhergehenden Anspruch, wobei das Steuersystem konfiguriert ist, während des Flugs des Luftfahrzeugs (10) die Anweisungssignale zu erzeugen und die Anweisungssignale an den Steuereingang anzulegen.

10. Verfahren zum Entlüften eines Kraftstoffsystems eines Luftfahrzeugs (10), wobei das Kraftstoffsystem einen Kraftstofftank (20) und ein Ventil (3) umfasst und das Verfahren Folgendes umfasst: Beurteilen einer Eignung zur Freigabe von Kraftstoffdampf und Öffnen des Ventils (3) auf der Grundlage der Beurteilung, wobei das Öffnen des Ventils (3) verursacht, dass Kraftstoffdampf mittels des Ventils (3) aus dem Kraftstofftank (20) freigegeben wird, und das Beurteilen einer Eignung zur Freigabe von Kraftstoffdampf Folgendes umfasst:
a. Beurteilen einer Eignung eines zum Kraftstofftank (20) lokalen Umgebungszustands zur Freigabe von Kraftstoffdampf, wobei der Umgebungszustand eine Luftzusammensetzung ist, oder
b. Beurteilen einer Eignung eines Orts des Luftfahrzeugs (10) zur Freigabe von Kraftstoffdampf durch Vergleichen des Orts des Luftfahrzeugs mit einer geographischen Datenbank von Folgendem: Populationsdichte, Luftqualität oder lokale Regulierungen, oder
c. Beurteilen, ob ein Volumen von Kraftstoffdampfemissionen vom Kraftstoffsystem einen Schwellenwert überschritten hat oder einen Schwellenwert überschreiten wird, oder
d. Beurteilen einer künftigen Routenplanung des Luftfahrzeugs (10).

11. Verfahren nach Anspruch 10, wobei das Beurteilen einer Eignung zur Freigabe von Kraftstoffdampf ein Beurteilen der Eignung des zum Kraftstofftank (20) lokalen Umgebungszustands zur Freigabe von Kraftstoffdampf umfasst.

12. Verfahren nach Anspruch 10 oder 11, wobei der zum Kraftstofftank (20) lokale Umgebungszustand ein Zustand einer Umgebung ist, die zum Luftfahrzeug (10) lokal und außerhalb des Kraftstofftanks (20) ist.

13. Verfahren nach einem der Ansprüche 10 bis 12, wobei das Beurteilen einer Eignung zur Freigabe von Kraftstoffdampf ein Beurteilen der Eignung des Orts des Luftfahrzeugs (10) zur Freigabe von Kraftstoffdampf umfasst.

14. Verfahren nach einem der Ansprüche 10 bis 13, wobei das Beurteilen einer Eignung zur Freigabe von Kraftstoffdampf ein Beurteilen davon umfasst, ob das Volumen von Kraftstoffdampfemissionen vom Kraftstoffsystem den Schwellenwert überschritten hat oder den Schwellenwert überschreiten wird.

15. Verfahren nach einem der Ansprüche 10 bis 14, wobei das Beurteilen einer Eignung zur Freigabe von Kraftstoffdampf ein Beurteilen einer künftigen Routenplanung des Luftfahrzeugs (10) umfasst.

## Revendications

1. Système de carburant pour un aéronef (10), le système de carburant comprenant : un réservoir de carburant (20) ; une soupape (3) ; un actionneur de soupape (1) avec une entrée de commande (8), l'actionneur de soupape (1) étant configuré pour ouvrir la soupape en réponse à des signaux de commande sur l'entrée de commande (8), et la soupape (3) étant configurée de sorte que l'ouverture de la soupape ventile le réservoir de carburant (20) amenant la vapeur de carburant à être libérée du réservoir de carburant par l'intermédiaire de la soupape (3) ; un système de commande couplé à l'entrée de commande (8), le système de commande étant configuré pour générer des signaux de commande et appliquer les signaux de commande à l'entrée de commande ; et un système de paramètres de commande (30) configuré pour obtenir un ou plusieurs paramètres de commande, le système de commande comprenant un système de commande automatisé (5) qui est couplé au système de paramètres de commande (30), et le système de commande automatisé (5) étant configuré pour générer automatiquement les signaux de commande sur la base des un ou plusieurs paramètres de commande, et **caractérisé en ce que** les un ou plusieurs paramètres de commande comprennent :
a. un paramètre de commande indicatif d'une condition environnementale locale au réservoir de carburant, la condition environnementale étant une composition d'air, ou
b. un paramètre de commande indicatif d'un emplacement de l'aéronef (10) comparé à une base de données géographique de : densité de population, qualité d'air, ou réglementations locales, ou
c. un paramètre de commande indicatif d'une planification d'itinéraire futur de l'aéronef (10), ou
d. un paramètre de commande indicatif de si les émissions de vapeur de carburant provenant du système de carburant ont dépassé ou dépasseront un seuil.

2. Système de carburant selon la revendication 1, dans lequel les un ou plusieurs paramètres de commande comprennent le paramètre de commande indicatif de la condition environnementale locale au réservoir de carburant (20).

3. Système de carburant selon la revendication 2, dans lequel la condition environnementale locale au réservoir de carburant (20) est une condition d'un environnement local à l'aéronef et à l'extérieur du réservoir de carburant.

4. Système de carburant selon l'une quelconque des revendications précédentes, dans lequel les un ou plusieurs paramètres de commande comprennent le paramètre de commande indicatif de l'emplacement de l'aéronef (10) .

5. Système de carburant selon l'une quelconque des revendications précédentes, dans lequel les un ou plusieurs paramètres de commande comprennent le paramètre de commande indicatif d'une planification d'itinéraire futur de l'aéronef (10).

6. Système de carburant selon l'une quelconque des revendications précédentes, comprenant en outre un système de détection de pression (6a, 6b) configuré pour déterminer une différence de pression entre l'intérieur du réservoir de carburant (20) et l'extérieur du réservoir de carburant, le système de commande étant configuré pour générer un signal de commande d'égalisation pour ouvrir la soupape (3) en réponse au franchissement d'un seuil par la différence de pression.

7. Système de carburant selon l'une quelconque des revendications précédentes, comprenant en outre un réservoir à évent (21) en communication fluidique avec l'atmosphère, la soupape (3) étant configurée de sorte que l'ouverture de la soupape (3) amène la vapeur de carburant à être libérée du réservoir de carburant (20) dans le réservoir à évent (21) par l'intermédiaire de la soupape (3).

8. Système de carburant selon l'une quelconque des revendications précédentes, dans lequel la soupape (3) est configurée de sorte que la vapeur de carburant libérée du réservoir de carburant (20) via la soupape (3) soit libérée, directement ou indirectement, dans l'atmosphère.

9. Système de carburant selon l'une quelconque des revendications précédentes, dans lequel le système de commande est configuré pour générer les signaux de commande et appliquer les signaux de commande à l'entrée de commande pendant le vol de l'aéronef (10).

10. Procédé de ventilation d'un système de carburant d'un aéronef (10), le système de carburant comprenant un réservoir de carburant (20) et une soupape (3), le procédé comprenant : l'évaluation d'une adéquation pour la libération de vapeur de carburant ; et l'ouverture de la soupape (3) sur la base de l'évaluation, l'ouverture de la soupape (3) amenant la vapeur de carburant à être libérée du réservoir de carburant (20) par l'intermédiaire de la soupape (3), l'évaluation d'une adéquation à la libération de vapeur de carburant comprenant :
a. une évaluation d'une adéquation d'une condition environnementale locale au réservoir de carburant (20) pour la libération de vapeur de carburant, la condition environnementale étant une composition d'air, ou
b. l'évaluation d'une adéquation d'un emplacement de l'aéronef (10) pour la libération de vapeur de carburant par comparaison de l'emplacement de l'aéronef avec une base de données géographique de : densité de population, qualité d'air ou réglementations locales, ou
c. l'évaluation de si un volume d'émissions de vapeur de carburant provenant du système de carburant a dépassé un seuil ou dépassera un seuil, ou
d. l'évaluation d'une planification d'itinéraire futur de l'aéronef (10).

11. Procédé selon la revendication 10, dans lequel l'évaluation d'une adéquation pour la libération de vapeur de carburant comprend l'évaluation de l'adéquation de la condition environnementale locale au réservoir de carburant (20) pour la libération de vapeur de carburant.

12. Procédé selon la revendication 10 ou la revendication 11, dans lequel la condition environnementale locale au réservoir de carburant (20) est une condition d'un environnement local à l'aéronef (10) et à l'extérieur du réservoir de carburant (20).

13. Procédé selon l'une quelconque des revendications 10 à 12, dans lequel l'évaluation d'une adéquation pour la libération de vapeur de carburant comprend l'évaluation de l'adéquation de l'emplacement de l'aéronef (10) pour la libération de vapeur de carburant.

14. Procédé selon l'une quelconque des revendications 10 à 13, dans lequel l'évaluation d'une adéquation à la libération de vapeur de carburant consiste à évaluer si le volume d'émissions de vapeur de carburant provenant du système de carburant a dépassé le seuil ou dépassera le seuil.

15. Procédé selon l'une quelconque des revendications 10 à 14, dans lequel l'évaluation d'une adéquation pour la libération de vapeur de carburant comprend l'évaluation d'une planification d'itinéraire futur de l'aéronef (10).
